# EUROPEAN PATENT APPLICATION

(11) **EP 2 050 840 A2**
(43) Date of publication of application: **22.04.2009**
(21) Application number: 08425652.8
(22) Date of filing: 08.10.2008
(51) Int. Cl.: C23C 28/00, C23C 30/00

(54) **Toolholder body or cutting tool with zirconium based surface coating**

(30) Priority: 16.10.2007 IT BS20070157
(71) Applicant: Noma di Belleri F.LLI S.n.c., 25060 Marcheno (BS) (IT)
(72) Inventor: Belleri, Lorenzo, 25060 Marcheno (Brecia) (IT)
(74) Representative: Sangiacomo, Fulvia

(57) **Abstract**

The present invention concerns the body of toolholders or rotating or fixed cutting tools of the type with removable mechanically fixed tool bits. The body is surface treated to form a zirconium based coating. The coating comprises two or more layers of zirconium nitride alternating with layers of chromium nitride, finishing with a layer of zirconium nitride and a covering film.

## Description

### Field of the Invention

The present invention concerns tool holders or cutting tools both rotating and fixed for removing shavings, in particular the body of the toolholders or tools of any shape and dimension with mechanically fixed and removable tool bits.

### State of the technique

When used, the bodies of toolholders or cutting tools for machine tools are subject to important stress such as:
- wear of surfaces, due to contact with the shavings during machining which can sometimes have large sections; in fact the shavings are removed from the piece being machined using strong pressure and tearing force exercised by the cutting inserts and hurled at a high speed against the body of the toolholder or tool,
- the heat conditions, due to the fact that during machining the cutting inserts sometimes reach very high temperatures, even as high as between 500-600°C, the same applying to the shavings, which noticeably also influence the temperature of the body of the toolholder or tool,
- the corrosion, due to the oils and lubricants used during machining.

As the technicians working in this sector are well aware, such stress is troublesome and has a negative influence on the performance and life of the toolholders or tools in question.

In particular the maintaining of the original dimensional precision of a toolholder or tool body can be jeopardized and consequently the machining to be carried out; the resistance of the seat on level of the cutting insert, which is important to guarantee the continuity of the yield during the machining; the life of the body with the cutting element.

Attempts to improve the resistance aspects of the abovementioned stress have been carried out using surface treatment of the toolholder body or tools by chroming or also through the use of a titanium-aluminium alloy, but the results have not been fully satisfactory and without removing the problems of surface friction and with the drawback that the coatings used may release harmful particles.

### Objective and Summary of the Invention

The objective of this invention is therefore to remove or at least noticeably reduce the above mentioned drawbacks and disadvantages of the body of the toolholders or tools according to the known technique.

Such an objective is achieved by means of an efficient surface treatment of the body of a toolholder or tool in order to coat it either with zirconium nitride or similar compounds containing zirconium.

It has been ascertained that with a similar coating of the surface a body of a toolholder or tool, the physical and mechanical characteristics has been improved by:
- an increase in the surface hardness of up to about 2300 HV;
- greater resistance to the pressure of the shavings, scratches and erosion;
- an increase in the resistance to heat up to at least 800°C, with consequent increase in performance at high running temperatures;
- an increase in the resistance to corrosion, measured in over 200 hours in salt fog, therefore greater resistance to corrosion, measured in over 200 hrs in salt fog, consequently greater resistance to corrosive chemical substances used during machining;
- a low roughness coefficient and consequently greater smoothness and defluxion of the shavings;
- an aesthetic improvement of the treated body, and not least
- an increase in the yield and lifespan.

### Brief Description of the Drawings

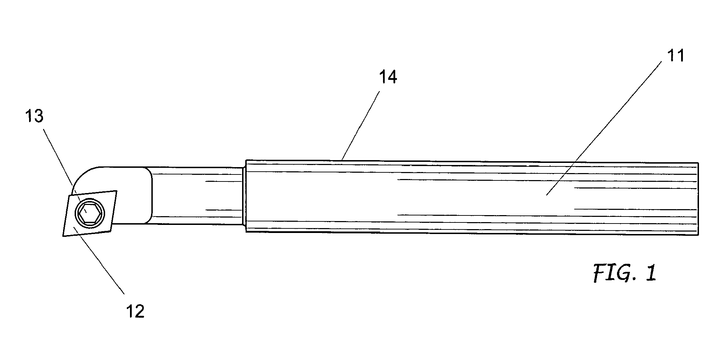

Further details of the invention will become evident in the continuation of the description carried out in reference to the enclosed non limitative drawings, in which
Fig. 1 shows an example of a tool which has received the surface treatment envisaged, and
Fig. 2 a cross-section of the treated body.

### Detailed Description of the Invention

Even if it can have any other configuration and usual dimension, the one indicatively represented is the toolholder body 11 provided with a tool bit 12 fixed mechanically in a removable way, for example by means of a screw 13.

In accordance with the invention, the surface 14 of said body 11 is subjected to coating treatment with.a zirconium based compound, in particular zirconium nitride or other compounds containing this chemical element that has a melting point of about 1930°C.

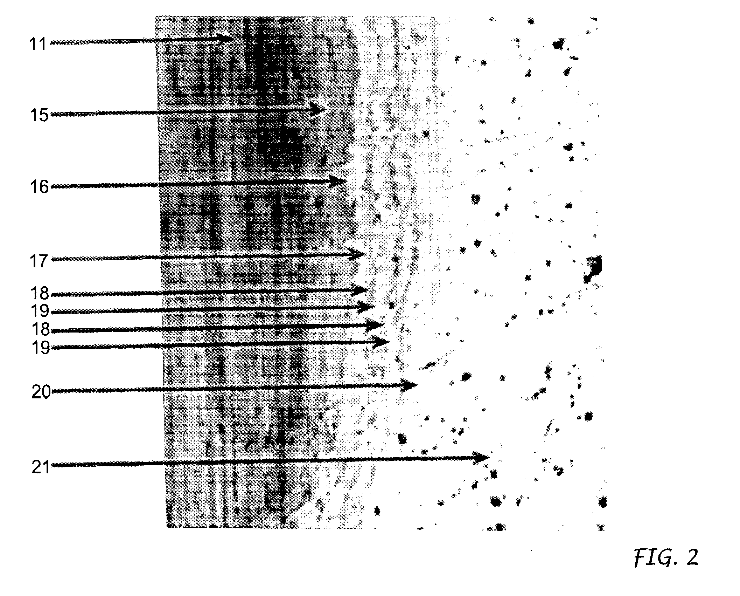

One possible treatment process envisages that the process be carried out in a controlled atmosphere, depositing on the surface of the body, after first cleaning it, two or more layers of zirconium nitride alternated with layers of chromium nitride. For example, and as shown in Fig. 2, on the surface of the body 11 to be coated a layer of soft zirconium nitride 15 is deposited, followed by a layer of chromium nitride 16, followed by a layer of hard zirconium nitride 17 and by successive alternated layers of chromium nitride 18 and hard zirconium nitride 19, completing the treatment with a final layer of hard zirconium nitride 20 and a covering film 21.

The body of the toolholders or tools coated in this way will have the positive characteristics referred to above and furthermore, from an ecological point of view, zirconium is an element that is in no way harmful for the environment, and because of this it is advantageous and is biocompatible with the living organisms, is hypoallergenic and is not considered to be toxic.

## Claims

1. Body of toolholders or cutting tools both rotating and fixed, of the type with mechanically fixed and removable tool bits, **characterized by** a surface coating with a zirconium based compound.

2. Body of toolholders or tool according to claim 1, **characterized by** a surface treatment with elements including zirconium nitride.

3. Body of toolholders or tool according to claim 1 or 2, **characterized in that** said coating includes two or more layers of zirconium nitride alternating with layers of chromium nitride, with a final layer of zirconium nitride with a covering film.

4. Body of toolholders or tool according to claim 3, **characterized in that** said coating comprises a first layer of soft zirconium nitride, then a layer of chromium nitride, followed by a layer of hard zirconium nitride and by successive alternating layers of chromium nitride and hard zirconium nitride, finishing the treatment with a layer of hard zirconium nitride and a covering film.

5. Process for the surface treatment of the body of rotating or fixed tool holder or cutting tools, of the type with mechanically fixed and removable tool bits comprising the step of a preliminary cleaning of the base material to be coated, and the deposit in succession, in a controlled atmosphere, of two or more layers of zirconium nitride alternated with layers of chromium nitride, with a final layer of zirconium nitride and a covering film.

6. Process according to claim 5, comprising a deposit on the base material of a first layer of soft zirconium nitride, then a layer of chromium nitride, followed by a layer of hard zirconium nitride and by successive alternating layers of chromium nitride and hard zirconium nitride, finishing the treatment with a layer of hard zirconium nitride and a covering film.
